# EUROPÄISCHE PATENTANMELDUNG

(11) **EP 1 248 454 A2**
(43) Veröffentlichungstag der Anmeldung: **09.10.2002**
(21) Anmeldenummer: 02450069.6
(22) Anmeldetag: 25.03.2002
(51) Int. Cl.: H04N 1/44

(54) **Verfahren zur Verschlüsselung von digitalen Bildern**

(30) Priorität: 06.04.2001 AT 5582001
(71) Anmelder: Siemens AG Österreich, 1210 Wien (AT)
(72) Erfinder: Wachman, Bernd, 8181 St. Ruprecht (AT); Heschgl, Kurt, 8010 Graz (AT); Birchbauer, Josef, 8322 Studenzen (AT); Marius, Wolfgang, 8043 Graz (AT)
(74) Vertreter: Matschnig, Franz, Dipl.-Ing.

(57) **Zusammenfassung**

Ein Verfahren zur Verschlüsselung von digitalen Bildern (BIL), die aus einzelnen Pixel (PIX, PI1, PI2) aufgebaut sind, wobei auf zumindest ein Pixel (PIX, PI1, PI2) zumindest zwei nicht miteinander kommutierende Operationen (XOR, BDV) angewendet werden, die eine Veränderung von Bitwerten (BIT) des zumindest einen Pixels (PIX, PI1, PI2) zwecks Verschlüsselung bewirken, wobei zu einer Kombination der beiden Operationen (XOR, BDV) eine inverse Operation (INV) existiert, welche die Bitwerte (BIT) eines verschlüsselten Pixels (PV1') in die Bitwerte des ursprünglichen Pixels (PIX, PI1, PI2) überführt.

## Beschreibung

Die Erfindung betrifft ein Verfahren zur Verschlüsselung von digitalen Bildern, die aus Pixel aufgebaut sind.

Weiters betrifft die Erfindung ein Verfahren zur Entschlüsselung von digitalen Bildern, die nach dem erfindungsgemäßen Verfahren verschlüsselt wurden.

Außerdem betrifft die Erfindung eine Verschlüsselungsvorrichtung zur Verschlüsselung von digitalen Bildern, die aus einzelnen Pixel aufgebaut sind.

Die Erfindung betrifft auch eine Entschlüsselungsvorrichtung zur Entschlüsselung von digitalen Bildern, die mit einer erfindungsgemäßen Vorrichtung verschlüsselt wurden.

Üblicherweise ist einem Pixel ein Grauwert bzw. Farbwert zugeordnet, der durch Bits bzw. Bitwerte des Pixels dargestellt wird.

Die Verschlüsselung digitaler Bilder stellt heutzutage ein Standardproblem dar, sodass eine große Anzahl von Verfahren zur Lösung dieses Problems bekannt geworden sind. Nachteilig an den bekannten Verfahren ist allerdings, dass sie entweder sehr rechenaufwendig oder leicht zu entschlüsseln sind.

Es ist daher eine Aufgabe der Erfindung, einen einfach zu realisierenden Weg zu schaffen, der es ermöglicht, eine möglichst gute Verschlüsselung eines digitalen Bildes zu verwirklichen.

Diese Aufgabe wird mit einem Verfahren der eingangs genannten Art dadurch gelöst, dass auf zumindest ein Pixel zumindest zwei nicht miteinander kommutierende Operationen angewendet werden, die eine Veränderung von Bitwerten des zumindest einen Pixels zwecks Verschlüsselung bewirken, wobei zu einer Kombination der beiden Operationen eine inverse Operation existiert, welche die Bitwerte eines verschlüsselten Pixels in die Bitwerte des ursprünglichen Pixels überführt.

Eine wesentliche Eigenschaft des erfindungsgemäßen Verfahrens besteht darin, dass die zur Verschlüsselung verwendeten Operationen nicht miteinander kommutieren, weshalb eine Verschlüsselungsoperation nicht identisch ist mit einer Entschlüsselungsoperation ist, und zweimaliges Anwenden der Verschlüsselungsoperation nicht wieder das originale Bild ergibt. Ein weiterer Vorteil der Erfindung besteht darin, dass der Rechenaufwand für die Entschlüsselung in etwa vergleichbar ist mit dem für die Verschlüsselung.

Eine günstige Ausführungsform der Erfindung sieht vor, dass zumindest eine der Operationen eine unäre Operation ist, die Bits eines Pixels miteinander verknüpft. Unter einer unären Operation bzw. Operator wird in diesem Dokument eine Operation oder Operator verstanden, die bzw. der ausschließlich auf ein Pixel wirkt, während eine binäre Operation bzw. ein binärer Operator auf zumindest zwei Pixel wirkt.

Weitere Vorteile lassen sich dadurch verwirklichen, dass die binäre Operation eine XOR-Verknüpfung zwischen zumindest zwei Bits zumindest zweier Pixel bewirkt, wobei der Ergebniswert der XOR Verknüpfung einem der zumindest zwei Pixel zugeordnet wird.

Eine praxisbewährte Variante der Erfindung besteht darin, dass die unäre Operation eine bedingte Vertauschung zwischen zumindest zwei Bits eines Pixels bewirkt.

Vorteilhafterweise bewirkt die unäre Operation eine Änderung des Grauwertes zumindest eines Pixels.

Eine unbefugte Entschlüsselung wird dadurch erschwert, dass dem Grauwert zumindest eines Pixels, der in einem vorgebbaren Wertebereich liegt ein neuer Grauwert aus diesem Wertebereich gemäß einer Zuordnungstabelle zugeordnet wird, und der ursprünglichen Grauwert durch den neuen Grauwert ersetzt wird, wobei sowohl der ursprüngliche als auch der neue Grauwert vorzugsweise je in einem Wertebereich zwischen 0 und 255 liegen.

In einer bevorzugten Ausführungsform der Erfindung werden die Pixel in Form von Bildzeilen angeordnet.

Eine Variante der Erfindung sieht vor, dass die Bildzeilen von einem Sensor erzeugt und an eine Steuerung übertragen werden, die dazu eingerichtet ist, aus den Bildzeilen das Bild aufzubauen und auf einer Ausgabeeinheit darzustellen.

Um eine gesicherte Übertragung der Bilddaten zu gewährleisten, kann der Sensor eine Sensorsteuerung aufweisen, die vor eine Bildzeile einen Code schreibt, der einen Bildzeilenanfang charakterisiert. Weitere Vorteile lassen sich dadurch erzielen, dass die Sensorsteuerung die Bildzeilen nummeriert und jede Zeile mit einer Prüfzahl versieht.

Zur Entschlüsselung des erfindungsgemäßen Verfahrens eignet sich insbesondere, das eingangs genannte Entschlüsselungsverfahren, bei welchem eine zu einer Kombination von zur Verschlüsselung eines Pixels verwendeten Operationen inverse Operation auf ein verschlüsseltes Pixel angewendet wird.

Zur Durchführung des erfindungsgemäßen Verschlüsselungsverfahren eignet sich insbesondere eine Verschlüsselungsvorrichtung der eingangs genannten Art, welche eine Steuerung aufweist, die dazu eingerichtet ist, auf zumindest ein Pixel zumindest zwei nicht miteinander kommutierende Operationen zur Veränderung von Bitwerten des zumindest einen Pixels anzuwenden.

Vorteilhafterweise ist die Steuerung dazu eingerichtet, eine unäre Operation zur Verknüpfung von Bits eines Pixels durchzuführen.

Weiters kann die Steuerung dazu eingerichtet sein, eine binäre Operation zur Verknüpfung zweier benachbarter Pixel durchzuführen.

Weitere Vorteile lassen sich dadurch erzielen, dass die Steuerung dazu eingerichtet ist, als binäre Operation eine XOR-Verknüpfung zwischen zumindest zwei Bits zumindest zweier Pixel durchzuführen, und den Ergebniswert der XOR-Verknüpfung einem der zumindest zwei Pixel zuzuordnen.

Günstigerweise ist die Steuerung dazu eingerichtet, eine einen Grauwert eines Pixels verändernde unäre Operation durchzuführen.

Die Steuerung kann dazu eingerichtet sein, dem Grauwert zumindest eines Pixels, der in einem vorgebbaren Wertebereich liegt einen neuen Grauwert aus diesem Wertebereich gemäß einer Zuordnungstabelle zuzuordnen, und den ursprünglichen Grauwert durch den neuen Grauwert zu ersetzen.

Eine praxiserprobte Variante der Erfindung sieht vor, dass sowohl der ursprüngliche als auch der neue Grauwert je in einem Wertebereich zwischen 0 und 255 liegen.

In einer günstigen Variante der Erfindung sind die Pixel in Form von Bildzeilen angeordnet.

Eine vorteilhafte Ausführungsform der Erfindung besteht darin, dass ein Sensor zur Erzeugung der Bildzeilen vorgesehen ist, welcher dazu eingerichtet ist, die Bildzeilen an eine Steuerung zu übertragen, die dazu eingerichtet ist, das Bild zu verschlüsseln und/oder die Bildzeilen zu empfangen und daraus das Bild aufzubauen und/oder auf einer Ausgabeeinheit darzustellen.

Um die Bildqualität durch Überragungsstörungen nicht zu stark zu beeinträchtigen, kann der Sensor eine Sensorsteuerung aufweisen, die dazu eingerichtet ist, vor eine Bildzeile einen Code für einen Bildzeilenanfang zu schreiben. Weiters kann die Sensorsteuerung dazu eingerichtet sein, die Bildzeilen zu nummerieren und jede Zeile mit einer Prüfzahl zu versehen.

Zur Durchführung des erfindungsgemäßen Entschlüsselungsverfahrens eignet sich insbesondere eine Entschlüsselungsvorrichtung der eingangs genannten Art, bei welcher eine Steuerung vorgesehen ist, die dazu eingerichtet ist, eine zu einer Kombination von zur Verschlüsselung eines Pixels verwendeten Operationen inverse Operation auf ein verschlüsseltes Pixel anzuwenden.

Die Erfindung samt weiterer Vorteile ist im folgenden anhand einiger nicht einschränkender Ausführungsbeispiele, die in der Zeichnung veranschaulicht sind, dargestellt, in dieser zeigen:
- Fig. 1: eine erfindungsgemäße Vorrichtung zum Verschlüsseln eines von einem Sensor aufgenommenen, digitalen Bildes,
- Fig. 2: eine erfindungsgemäße Vorrichtung zum Entschlüsseln eines digitalen Bildes,
- Fig. 3: ein digitales Bild welches in Form von Bildzeilen vorliegt,
- Fig. 4: das digitale Bild aus Fig. 3 in verschlüsselter Form,
- Fig. 5a: ein digitales Bild eines Fingerabdruckes,
- Fig. 5b: das Bild aus Fig. 1a nach Anwendung eines Operators zur bedingten Vertauschung auf die einzelnen Pixel des Bildes,
- Fig. 5c: eine Tabelle mit Werten eines Pixels und eines durch bedingte Vertauschung von Bits dieses Pixels verschlüsselten Pixels,
- Fig. 6a: ein digitales Bild eines Fingerabdruckes,
- Fig. 6b: zeigt das Bild aus Fig. 2a nach Anwendung eines Operators, der eine XOR Verknüpfung zwischen zumindest zwei Bits eines Pixels bewirkt.
- Fig. 6c: eine Tabelle mit Werten zweier Pixel und eines durch eine XOR Verknüpfung dieser beiden Pixel verschlüsselten Pixels,
- Fig. 7a: zeigt ein digitales Bild eines Fingerabdruckes,
- Fig. 7b: zeigt das Bild aus Fig. 3a nach Anwendung eines Operators zur bedingten Vertauschung und eines XOR Operators und
- Fig. 7c: eine tabellarische Darstellung des erfindungsgemäßen Verschlüsselungsverfahrens und
- Fig. 7d: eine tabellarische Darstellung des erfindungsgemäßen Entschlüsselungsverfahrens.

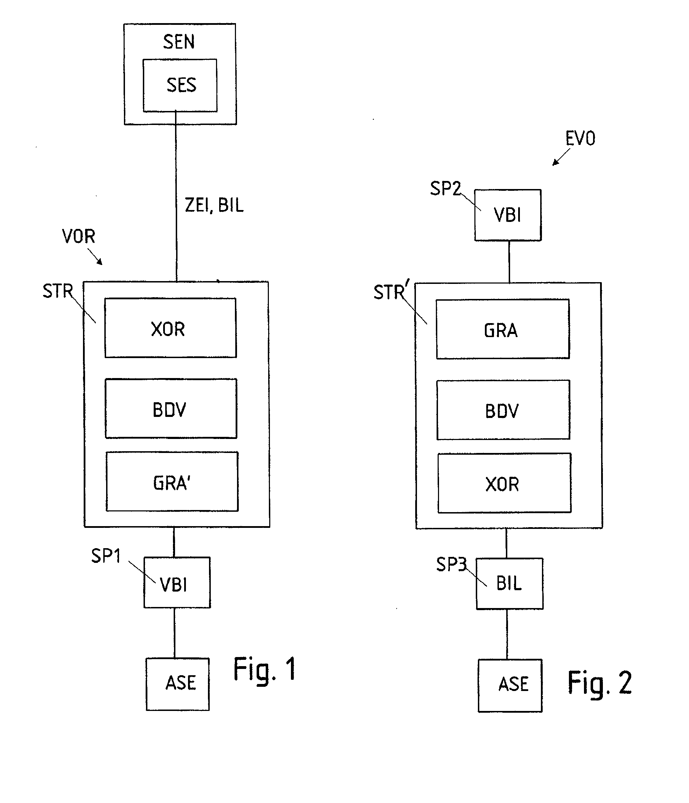

Nach Fig. 1 weist eine erfindungsgemäße Vorrichtung VOR zum Verschlüsseln eines digitalen Bildes BIL eine Steuerung STR auf, die dazu eingerichtet ist, auf einzelne Pixel des Bildes BIL zumindest zwei nicht miteinander kommutierende Operationen XOR, BDV, GRA' anzuwenden. Diese Operationen und ihre Anwendung zu Verschlüsselungszwecken werden weiter unten noch genauer dargestellt und diskutiert.

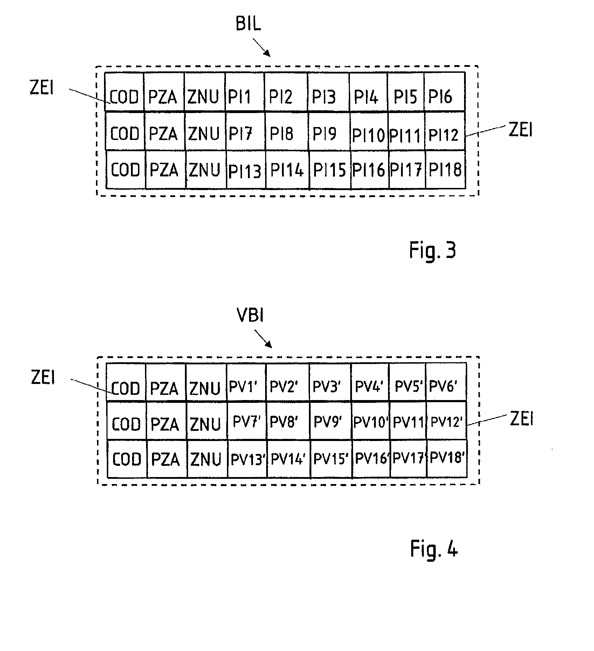

Das digitale zu verschlüsselnde Bild BIL kann beispielsweise von einer hier nicht dargestellten CCD-Kamera oder einem Sensor SEN aufgezeichnet werden, wobei das Bild BIL in Form von Zeilen ZEI erzeugt werden kann. Um eine gesicherte Übertragung der Zeilen ZEI bzw. des Bildes BIL an die Steuerung STR zu gewährleisten, kann der Sensor SEN eine Sensorsteuerung SEN aufweisen, die, wie in Fig. 3 dargestellt, dazu eingerichtet ist, an den Anfang jeder Zeile ZEI einen konstanten Code COD zu schreiben, der den Zeilenanfang markiert. Weiters kann die Sensorsteuerung SES jeder Zeile eine Prüfzahl PZA sowie eine Zeilennummer ZNU hinzufügen. Der Code COD, die Prüfzahl PZA und die Zeilennummer ZNU bilden einen "Zeilenrahmen", der zusammen mit jeder Zeile ZEI des Bildes BIL an die Steuerung STR übertragen wird.

In einer einfachen Ausführungsform kann der Code COD ein reserviertes Bitmuster und die Prüfzahl PZA und die Zeilennummer ZNU einfache Zählfelder sein, die modulo ihres maximalen Wertes hochgezählt werden.

Durch die Definition eines Zeilenrahmens samt Prüfinformation kann nach einer Übertragungsstörung der Bilddaten von dem Sensor SEN an die Steuerung STR der Verschlüsselungsvorrichtung VOR, der weitere Empfang des Bildes neu aufgesetzt und fehlerfrei fortgesetzt werden. Weiters kann die Steuerung STR der Verschlüsselungsvorrichtung VOR dazu eingerichtet sein, einen Fehler in der Bildübertragung anhand des Zeilenrahmens bzw. der Prüfinformation zu erkennen und seine Schwere zu erkennen.

Durch Beifügen des Zeilenrahmens wird das Datenvolumen nur geringfügig vergrößert, wobei die beigefügten Informationen im Fall einer fehlerhaften Übertragung jedoch eine genaue Lokalisierung und weitgehende Wiederherstellung des Bildes BIL erlauben. Darüber hinaus können auch Zeilen ZEI mit variabler Länge verwendet werden.

Die Übertragung der Bilddaten muss nicht unmittelbar von dem Sensor SEN an die Verschlüsselungsvorrichtung VOR erfolgen, sondern es kann auch eine, hier nicht dargestellte Speichereinheit, vorgesehen sein, in welche die Bilddaten von der Sensorsteuerung SEN geschrieben werden, wobei die Auslesung und Übertragung an die Verschlüsselungsvorrichtung VOR zu einem beliebigen Zeitpunkt erfolgen kann.

Nach erfolgter Verschlüsselung kann das verschlüsselte Bild VBI in einem Speicher SP1 abgelegt werden oder im Bedarfsfall auf einer Ausgabeeinheit ASE dargestellt werden. Eine Übertragung an einen hier nicht dargestellten Empfänger ist aber genauso denkbar. Wird das verschlüsselte Bild VBI an einen Empfänger weitergeleitet, so kann die Übertragung ebenfalls gemäß der oben beschriebenen zeilenorientierten Übertragungsmethode unter Verwendung des Zeilenrahmens erfolgen.

Nach Fig. 2 kann eine erfindungsgemäße Entschlüsselungsvorrichtung EVO zum Entschlüsseln von verschlüsselten, digitalen Bildern VBI, einen Speicher SP2 aufweisen, in welchem das verschlüsselte Bild VBI abgelegt ist. Zur Entschlüsselung des verschlüsselten Bildes VBI ist eine Steuerung STR' vorgesehen, die dazu eingerichtet ist, eine zu einer Kombination von zur Verschlüsselung eines Bildes BIL verwendeten Operationen inverse Operation auf ein verschlüsseltes Bild VBI anzuwenden. Das entschlüsselte Bild BIL kann beispielsweise in einem Speicher SP3 abgelegt oder auf einer Ausgabeeinheit ASE ausgegeben werden.

Wie in Fig. 3 dargestellt ist, kann das digitale Bild BIL aus den bereits oben erwähnten Zeilen ZEI aufgebaut sein, wobei jede Bildzeile mehrere Pixel PI1-PI18 enthält. Zur Verschlüsselung des Bildes werden die weiter unten näher beschriebenen Operationen auf die Pixel PI1-PI18 des Bildes BIL angewendet.

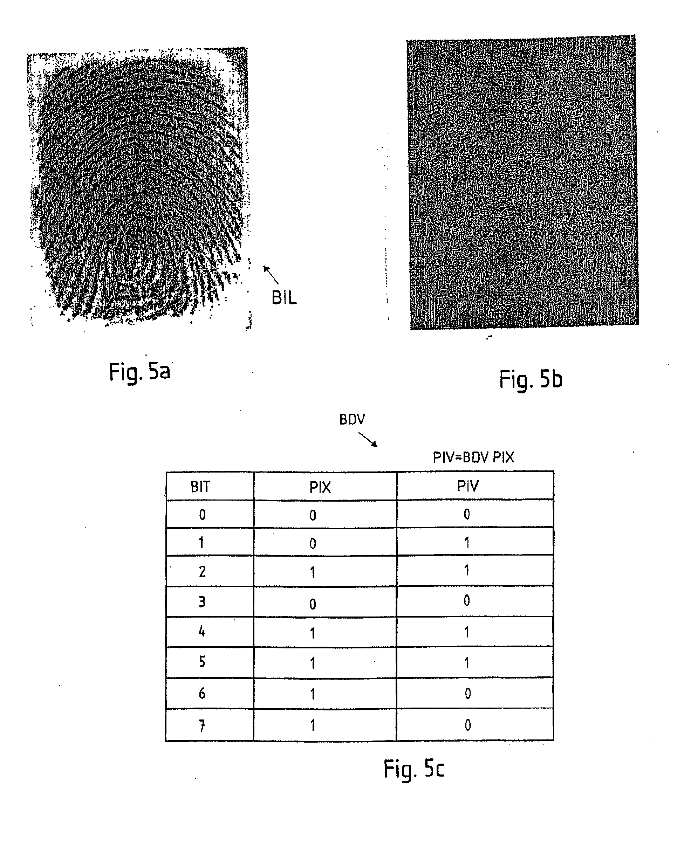

Nach Fig. 4 kann das verschlüsselte Bild VBI ebenfalls in Form von Zeilen ZEI vorliegen, wobei jedoch die einzelnen Pixel PV1'-PV18' in verschlüsselter Form vorliegen.

Gemäß Fig. 5a und 5b kann die bedingte Vertauschung zweier Bits eines Pixels PIX zu einer Kodierung eines digitalen Bildes BIL verwendet werden. Diese Operation, die in Fig. 5c näher veranschaulicht ist, nützt die stochastischen Eigenschaften der Bildinformation aus, die sich am stärksten im niederwertigsten Bit BIT eines Pixels PIX ausdrückt. In dem dargestellten Ausführungsbeispiel werden das siebente und das zweite Bit BIT des Pixels PIX vertauscht, wenn das niederwertigste Bit BIT dieses Pixels PIX gesetzt ist, sodass sich ein verschlüsseltes Pixel PIV ergibt. Ausgehend von der einfachen Annahme, dass alle Bits BIT mit derselben Wahrscheinlichkeit gesetzt bzw. nicht gesetzt sind, wird diese Operation de facto bei jedem zweiten Pixel PIX durchgeführt. Weiters führt diese Operation unter der soeben getroffenen Annahme bei 50% der Pixel PIX dazu, dass sich der gesamte Pixelwert ändert, weil zwei von den vier möglichen Zuständen zweier Bits BIT keine Änderung durch Vertauschung erfahren.

Wie aus Fig. 5b zu erkennen ist, ist die Struktur eines Fingerprints nach der bedingten Vertauschung nicht mehr klar ersichtlich, obwohl die gesamte Struktur und für Experten möglicherweise der Typ des Fingerprints noch erkennbar sind. Hier sei angemerkt, dass zweimaliges Anwenden der Operation der bedingten Vertauschung BDV das originale Bild BIL wieder herstellt.

Um mit dieser Methode noch mehr Informationen zu "zerstören", könnte man die bedingte Vertauschung BDV noch erweitern, allerdings ist die Sicherheit der Verschlüsselung durch Verwendung eines binären XOR Operators einfacher und schneller zu steigern, dessen Wirkung im folgenden näher erläutert ist.

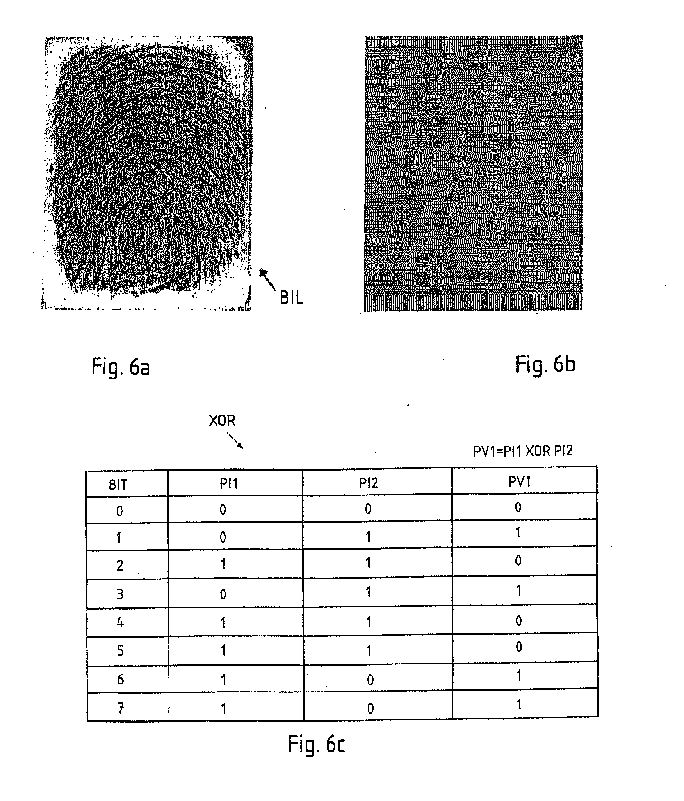

Gemäß Fig. 6a, 6b und 6c stellt die Verknüpfung benachbarter Pixel durch eine bitweise XOR Operation eine Verbesserung der Verschlüsselung der Information eines Bildes BIL - hier eines Fingerprintbildes - dar. Bei der bitweisen XOR Operation werden Bits BIT, die in den Pixeln an identischer Position stehen, miteinander verglichen, wobei das Ergebnis gemäß der in Fig. 6c dargestellten Tabelle gebildet wird.

Die XOR Operation verändert wesentlich mehr Detailinformationen als der oben erwähnte Operator der bedingten Vertauschung. Wie aus Fig. 6b ersichtlich ist, ist die ungefähre Struktur des Fingerprints jedoch noch immer erkennbar. Der Grund dafür ist darin zu finden, dass benachbarte Pixel in einem Fingerprintbild stark miteinander korreliert sind.

Die XOR Operation ist identisch mit ihrer inversen Operation, d. h., wendet man dieselbe Operation auf das verschlüsselten Bild an erhält man wieder das originale Bild.

Gemäß Fig. 6c bildet bei der bitweisen XOR Verknüpfung eines ersten Pixel PI1 und eines benachbarten, zweiten Pixels PI2 das Ergebnis ein verschlüsseltes Pixel PV1. Zur Verschlüsselung des ursprünglichen Bildes wird das erste Pixel PI1 durch das verschlüsselte Pixel PV1 ersetzt. Die Verschlüsselung des zweiten Pixels PI2 erfolgt mittels einer bitweisen XOR Verknüpfung mit einem benachbarten, dritten Pixel. Analog zu der eben beschriebenen Vorgangsweise können im wesentlichen alle Pixel des Bildes anhand eines ihnen unmittelbar benachbarten Pixels verschlüsselt werden.

Natürlich muss die XOR Verknüpfung zweier benachbarter Pixel nicht unbedingt zwischen Bits mit identischer Position in den einzelnen Pixeln erfolgen, sondern kann auch mit Bits vorgebbarer Position durchgeführt werden.

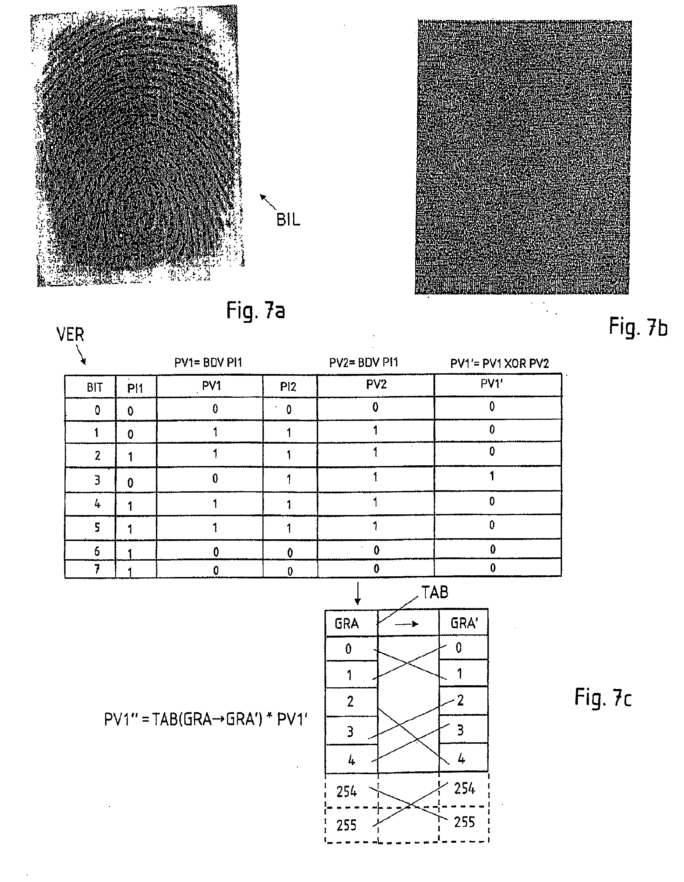

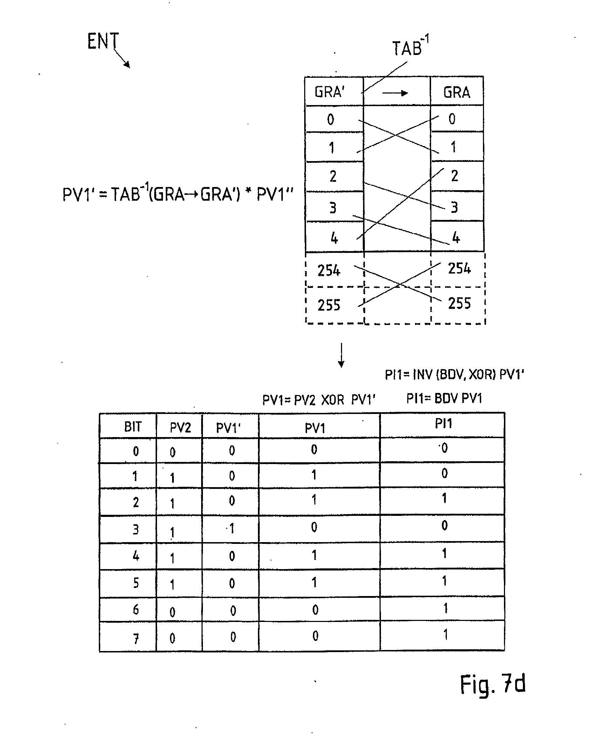

Nach Fig. 7a und 7b führt die Kombination - das hintereinander Ausführen - der beiden oben beschriebenen Operationen zu einer wesentlichen Veränderung der Information des Bildes BIL. Wie aus Fig. 7b ersichtlich ist, ist weder eine Lokalisierung des Fingerprintbildes möglich, noch kann eine Strukturinformation erkannt werden. Der Grund dafür ist, dass die Korrelation benachbarter Pixel, die auch noch nach der XOR Operation noch ersichtlich ist, durch die Anwendung des unären Operators der bedingten Vertauschung zweier Bits verändert wird. Das Bild erscheint im wesentlichen nur mehr als zufällige Abfolge von Helligkeitswerten.

Gemäß Fig. 7c wird zur Verschlüsselung VER des Bildes BIL an einem ersten zu verschlüsselnden Pixel PI1 eine bedingt Vertauschung durchgeführt - das zweite Bit BIT wird mit dem siebenten BIT vertauscht, wenn das siebente Bit gesetzt ist. Hierauf wird das so verschlüsselte Pixel PV1 mit einem noch unverschlüsselten benachbarten Pixel PI2 mittels der oben beschriebenen XOR Verknüpfung verknüpft, sodass ein zweites verschlüsseltes Pixel PV2 erhalten wird. Zur Verschlüsselung des Bildes BIL wird das erste Pixel PI1 durch das zweite verschlüsselte Pixel PV1' ersetzt.

Das erfindungsgemäße Verfahren erlaubt es somit unter Anwendung rechentechnisch einfacher Operatoren auf jedes Pixel eines Bildes, unter Nutzung des vorhandenen Rauschens des Bildes, eine einfach zu realisierende und sehr effiziente Verschlüsselung durchzuführen.

Im Unterschied zu den beiden hier verwendeten Operatoren bzw. Operationen verliert deren Kombination eine wesentliche Eigenschaft, sie ist nicht mehr identisch mit ihrer inversen Operation, d. h., wendet man die Kombination der beiden Operatoren in derselben Reihenfolge auf das verschlüsselte Bild an, erhält man das originale Bild nicht. Diese kann nur rekonstruiert werden, wenn man die beiden Operatoren zw. Operationen in ihrer Abfolge umkehrt.

Nach den soeben beschriebenen Operationen kann dem Grauwert GRA des verschlüsselten Pixels PV1' gemäß einer Zuordnungstabelle TAB ein neuer Grauwert GRA' zugewiesen, wobei der neue Grauwert GRA' den ursprünglichen Grauwert GRA ersetzt. Diese Zuordnung stellt so wie die Bedingte Vertauschung BDV eine unäre Operation dar. Bei einem Wertebereich des ursprünglichen GRA und des neuen Grauwertes GRA' von 0 bis 255 ergeben sich 256! Zuordnungsmöglichkeiten, wodurch der Aufwand für eine unbefugte Entschlüsselung eines derart codierten Pixels PV1" sehr hoch ist.

Zur Entschlüsselung ENT des verschlüsselten Pixels PV1" wird zuerst anhand der Zuordnungstabelle TAB bzw. ihrer inversen Tabelle *TAB*⁻¹ der ursprünglichen Grauwert GRA des Pixels PV1 hergestellt, sodann erfolgt die weitere Entschlüsselung durch Anwendung einer zu der zur Verschlüsselung verwendeten Kombination von Operationen bzw. Operatoren inverse Operation INV auf das verschlüsseltes Pixel PV1'. Hierzu werden die Operationen XOR, BDV in umgekehrter Reihenfolge, wie bei der Verschlüsselung VER angewendet.

Eine erfindungsgemäße Vorrichtung zur Ver- und Entschlüsselung kann beispielsweise mit einem handelsüblichen PC realisiert werden, der zur Durchführung des erfindungsgemäßen Verfahrens eingerichtet ist. Programmiersprachen, die sich zur Realisierung des Verfahrens eignen, sind dem Fachmann in großer Zahl bekannt, beispielsweise C, C⁺⁺ etc.

## Patentansprüche

1. Verfahren zur Verschlüsselung von digitalen Bildern (BIL), die aus einzelnen Pixel (PIX, PI1, PI2) aufgebaut sind, **dadurch gekennzeichnet, dass** auf zumindest ein Pixel (PIX, PI1, PI2) zumindest zwei nicht miteinander kommutierende Operationen (XOR, BDV) angewendet werden, die eine Veränderung von Bitwerten (BIT) des zumindest einen Pixels (PIX, PI1, PI2) zwecks Verschlüsselung bewirken, wobei zu einer Kombination der beiden Operationen (XOR, BDV) eine inverse Operation (INV) existiert, welche die Bitwerte (BIT) eines verschlüsselten Pixels (PV1') in die Bitwerte des ursprünglichen Pixels (PIX, PI1, PI2) überführt.

2. Verfahren nach Anspruch 1, **dadurch gekennzeichnet, dass** zumindest eine der Operationen (BDV, XOR) eine unäre Operation (BDV) ist, die Bits (BIT) eines Pixels (PIX, PI1, PI2) miteinander verknüpft.

3. Verfahren nach einem der Ansprüche 1 bis 2, **dadurch gekennzeichnet, dass** zumindest eine der Operationen (BDV, XOR) eine binäre Operation (XOR) ist, die zumindest zwei benachbarte Pixel (PIX, PI1, PI2) miteinander verknüpft.

4. Verfahren nach Anspruch 3, **dadurch gekennzeichnet, dass** die binäre Operation (XOR) eine XOR-Verknüpfung zwischen zumindest zwei Bits (BIT) zumindest zweier Pixel (PI1, PI2) bewirkt, wobei der Ergebniswert der XOR-Verknüpfung (XOR) einem der zumindest zwei Pixel (PI1, PI2) zugeordnet wird.

5. Verfahren nach einem der Ansprüche 2 bis 4, **dadurch gekennzeichnet, dass** die unäre Operation (BDV) eine bedingte Vertauschung (BDV) zwischen zumindest zwei Bits eines Pixels (PIX, PI1, PI2) bewirkt.

6. Verfahren nach einem der Ansprüche 2 bis 4,**dadurch gekennzeichnet, dass** die unäre Operation eine Änderung des Grauwertes (GRA) zumindest eines Pixels (PV1', PIX, PI1, PI2) bewirkt.

7. Verfahren nach Anspruch 6, **dadurch gekennzeichnet, dass** dem Grauwert (GRA) zumindest eines Pixels (PIX, PI1, PI2), der in einem vorgebbaren Wertebereich liegt ein neuer Grauwert (GRA') aus diesem Wertebereich gemäß einer Zuordnungstabelle (TAB) zugeordnet wird, wobei der ursprünglichen Grauwert (GRA) durch den neuen Grauwert (GRA') ersetzt wird.

8. Verfahren nach Anspruch 7, **dadurch gekennzeichnet, dass** sowohl der ursprüngliche (GRA) als auch der neue Grauwert (GRA') je in einem Wertebereich zwischen 0 und 255 liegen.

9. Verfahren nach einem der Ansprüche 1 bis 7, **dadurch gekennzeichnet, dass** die Pixel (PIX, PI1, PI2) in Form von Bildzeilen (ZEI) angeordnet werden.

10. Verfahren nach Anspruch 9, **dadurch gekennzeichnet, dass** die Bildzeilen von einem Sensor (SEN) erzeugt und an eine Steuerung (STR) übertragen werden, die dazu eingerichtet ist, das Bild (BIL) zu verschlüsseln und/oder aus den Bildzeilen (ZEI) das Bild (BIL) aufzubauen und/oder auf einer Ausgabeeinheit (ASE) darzustellen.

11. Verfahren nach Anspruch 10, **dadurch gekennzeichnet, dass** der Sensor (SEN) eine Sensorsteuerung (SES) aufweist, die vor eine Bildzeile (ZEI) einen Code (COD) schreibt, der einen Bildzeilenanfang charakterisiert.

12. Verfahren nach Anspruch 11, **dadurch gekennzeichnet, dass** die Sensorsteuerung (SES) die Bildzeilen (ZEI) nummeriert und jede Zeile mit einer Prüfzahl (PRZ) versieht.

13. Verfahren zur Entschlüsselung von digitalen Bildern (BIL), die nach einem Verfahren der Ansprüche 1 bis 6 verschlüsselt wurden, **dadurch gekennzeichnet, dass** eine zu einer Kombination von zur Verschlüsselung eines Pixels (PIX, PI1, PI2) verwendeten Operationen (XOR, BDV) inverse Operation (INV) auf ein verschlüsseltes Pixel (PV2) angewendet wird.

14. Verschlüsselungsvorrichtung (VOR) zur Verschlüsselung von digitalen Bildern (BIL), die aus einzelnen Pixel (PIX, PI1, PI2) aufgebaut sind, **dadurch gekennzeichnet, dass** sie eine Steuerung (STR) aufweist, die dazu eingerichtet ist, auf zumindest ein Pixel (PIX, PI1, PI2) zumindest zwei nicht miteinander kommutierende Operationen (XOR, BDV) zur Veränderung von Bitwerten (BIT) des zumindest einen Pixels (PIX, PI1, PI2) anzuwenden.

15. Verschlüsselungsvorrichtung nach Anspruch 10, **dadurch gekennzeichnet, dass** die Steuerung dazu eingerichtet ist, eine unäre Operation (BDV) zur Verknüpfung von Bits (BIT) eines Pixels (PIX, PI1, PI2) durchzuführen.

16. Verschlüsselungsvorrichtung nach Anspruch 10 oder 11, **dadurch gekennzeichnet, dass** die Steuerung dazu eingerichtet ist, eine binäre Operation (XOR) zur Verknüpfung zweier benachbarter Pixel (PIX, PI1, PI2) durchzuführen.

17. Verschlüsselungsvorrichtung nach Anspruch 11, **dadurch gekennzeichnet, dass** die Steuerung (STR) dazu eingerichtet ist, als binäre Operation (XOR) eine XOR-Verknüpfung zwischen zumindest zwei Bits (BIT) zumindest zweier Pixel (PI1, PI2) durchzuführen, und den Ergebniswert der XOR-Verknüpfung (XOR) einem der zumindest zwei Pixel (PI1, PI2) zuzuordnen.

18. Verschlüsselungsvorrichtung nach einem der Ansprüche 11 bis 13, **dadurch gekennzeichnet, dass** die Steuerung (STR) dazu eingerichtet ist, als unäre Operation (BDV) eine bedingte Vertauschung (BDV) zwischen zumindest zwei Bits eines Pixels (PIX, PI1, PI2) durchzuführen.

19. Verschlüsselungsvorrichtung nach einem der Ansprüche 11 bis 14, **dadurch gekennzeichnet, dass** die Steuerung (STR) dazu eingerichtet ist, eine einen Grauwert (GRA) eines Pixels (PIX, PI1, PI2) verändernde unäre Operation durchzuführen.

20. Verschlüsselungsvorrichtung nach Anspruch 15, **dadurch gekennzeichnet, dass** die Steuerung (STR) dazu eingerichtet ist, dem Grauwert (GRA) zumindest eines Pixels (PIX, PI1, PI2), der in einem vorgebbaren Wertebereich liegt einen neuen Grauwert (GRA') aus diesem Wertebereich gemäß einer Zuordnungstabelle (TAB) zuzuordnen, und den ursprünglichen Grauwert (GRA) durch den neuen Grauwert (GRA') zu ersetzen.

21. Verschlüsselungsvorrichtung nach Anspruch 16, **dadurch gekennzeichnet, dass** sowohl der ursprüngliche (GRA) als auch der neue Grauwert (GRA') je in einem Wertebereich zwischen 0 und 255 liegen.

22. Verschlüsselungsvorrichtung nach einem der Ansprüche 14 bis 21, **dadurch gekennzeichnet, dass** die Pixel (PIX, PI1, PI2) in Form von Bildzeilen (ZEI) angeordnet sind.

23. Verschlüsselungsvorrichtung nach Anspruch 22, **dadurch gekennzeichnet, dass** ein Sensor zur Erzeugung der Bildzeilen (ZEI) vorgesehen ist, welcher dazu eingerichtet ist die Bildzeilen (ZEI) an eine Steuerung (STR) zu übertragen, die dazu eingerichtet ist, die Bildzeilen (ZEI) zu empfangen, zu verschlüsseln und/oder und daraus das Bild (BIL) aufzubauen und/oder auf einer Ausgabeeinheit (AUS) darzustellen.

24. Verschlüsselungsvorrichtung nach Anspruch 23, **dadurch gekennzeichnet, dass** der Sensor (SEN) eine Sensorsteuerung (SES) aufweist, die dazu eingerichtet ist, vor eine Bildzeile (ZEI) einen Code für einen Bildzeilenanfang zu schreiben.

25. Verschlüsselungsvorrichtung nach Anspruch 23 oder 24, **dadurch gekennzeichnet, dass** die Sensorsteuerung (SES) dazu eingerichtet ist, die Bildzeilen (ZEI) zu nummerieren und jede Zeile mit einer Prüfzahl (PRZ) zu versehen.

26. Verschlüsselungsvorrichtung nach einem der Ansprüche 14 bis 25, **dadurch gekennzeichnet, dass** die Pixel (PIX, PI1, PI2) in Form von Bildzeilen (ZEI) angeordnet sind.

27. Entschlüsselungsvorrichtung zur Entschlüsselung von digitalen Bildern (BIL), die mit einer Vorrichtung nach den Ansprüchen 14 bis 26 verschlüsselt wurden, **dadurch gekennzeichnet, dass** eine Steuerung (STR') vorgesehen ist, die dazu eingerichtet ist, eine zu einer Kombination von zur Verschlüsselung eines Pixels (PIX, PI1, PI2) verwendeten Operationen (XOR, BDV) inverse Operation (INV) auf ein verschlüsseltes Pixel (PV2) anzuwenden.
